# EUROPEAN PATENT APPLICATION

(11) **EP 1 677 269 A2**
(43) Date of publication of application: **05.07.2006**
(21) Application number: 05028571.7
(22) Date of filing: 28.12.2005
(51) Int. Cl.: G08C 17/00

(54) **Remote control signal, remote control system, and method of controlling device with remote controller**

(30) Priority: 31.12.2004 KR 2004118035
(71) Applicant: LG Electronics Inc., Yongdungpo-gu Seoul (KR)
(72) Inventor: Kim, Ik Ju, Gunpo-si Gyeonggi-do (KR)
(74) Representative: Zech, Stefan Markus

(57) **Abstract**

A remote control system includes a remote controller and a device controlled by the remote controller. The remote controller generates a remote control signal and transmits the control signal to the device to control operation of the device. The control signal includes a header portion indicating a key information transmission mode in which key information of the remote controller is transmitted, and a code portion containing at least a portion of the main data representing the key information of the remote controller. The code portion includes the portion of the main data, data defining a data type and byte index of the data portion and a total length of the main data, and an error checking code associated with the main data portion.

## Description

This application claims the benefit of Korean Patent Application No. 10-2004-0118035, filed on December 31, 2005, which is hereby incorporated by reference as if fully set forth herein.

### BACKGROUND OF THE INVENTION

### Field of the Invention

The present invention relates to a remote controller, and more particularly to a remote control signal, a remote control system, and a method of controlling a device with a remote controller using the remote control signal.

### Discussion of the Related Art

With the increasing development of social automation and social diversification, numerous industrial devices and household appliances have been generally operated by their unique remote-controllers. If a user employs the remote-controller, the user need not go to an installation place of a receiver capable of receiving a desired signal at a remote site, and need not directly operate the receiver at the installation place, such that the user can command operations of the receiver at a remote site. In other words, the remote-controller has been widely used in all the receivers (e.g., TVs, audio-players, video-players, and airconditioners, etc.)

The aforementioned remote-controller and its associated receiver have been supplied to a user as a single set when the user purchases the receiver. Therefore, the user owns a variety of remote-controllers as many as the number of receivers.

However, the remote-controller may be generally manufactured as an infrared (IR) remote-controller, and has different binary codes according to manufacturing companies and product models, etc.

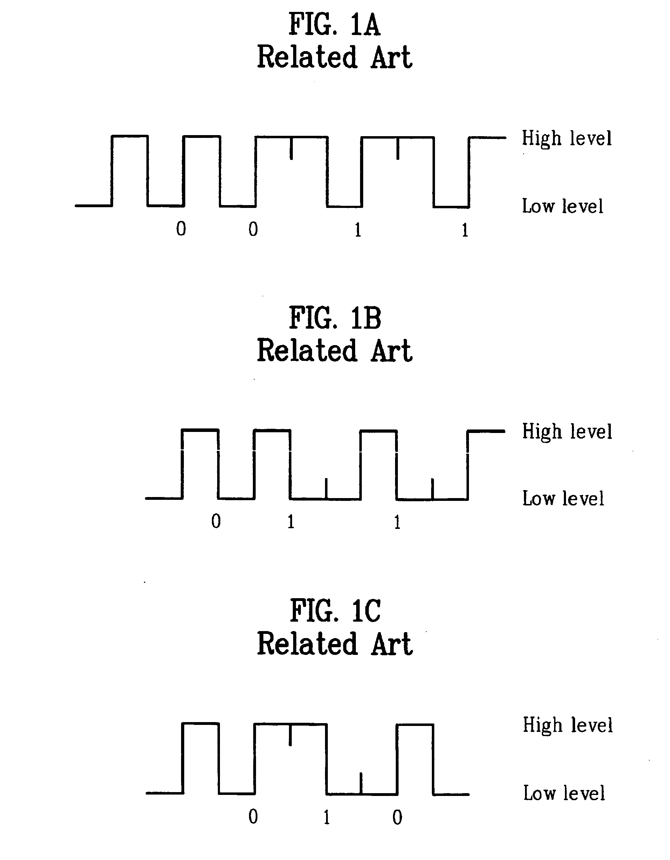

FIGS. 1a ~ 1c exemplarily show different binary codes according to the manufacturing companies and product models. As can be seen from FIGS. 1a ~ 1c, binary codes shown in FIGS. 1a ~ 1c have different times and lengths.

FIG. 1a shows a pulse-coded signal scheme, which has been mainly used by Sony Corporation. The pulse-coded signal scheme shown in FIG. 1a changes the length of a high pulse signal to code necessary information. In this case, a signal of a short high pulse becomes zero, and another signal of a long high pulse becomes a predetermined value of 1.

FIG. 1b shows a space-coded signal scheme, which has been mainly used by Panasonic Corporation. The space-coded signal scheme changes the length of a low pulse signal (i.e., space). In this case, a signal of a short low pulse becomes zero, and another signal of a long low pulse becomes a predetermined value of 1.

FIG. 1c shows a shift-coded signal scheme, which has been mainly used by Philips Corporation. The shift-coded signal scheme indicates two values of 0 and 1 using a transition direction when information is coded. In this case, a signal of a short low pulse becomes zero, and another signal of a long low pulse becomes a predetermined value of 1.

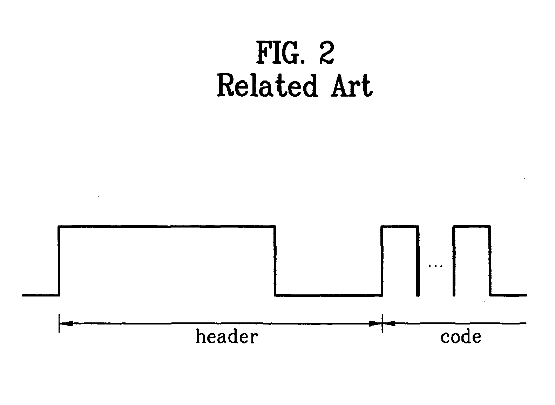

Individual remote-controllers transmit a series of signals using the aforementioned schemes. Each signal can be mainly divided into a header part and a code part as shown in FIG. 2. The header is transmitted to a receiver before an actual code is transmitted to the receiver, such that it activates the receiver. All the manufacturing companies have generally used the same header shape. The header and the code are continuously transmitted to the receiver while a button of the remote-controller is pressed. A repetition time of the code is generally set to at least 500msec. The code is divided into an address transmission part and a command transmission part. The address selects a specific product at which a signal is received, and a command designates a necessary operation.

The following Table 1 is a table including codes available for remote-controllers of individual manufacturing companies.

[Table 1]

| Brand | Length | Type | HeadP | Heads | 1Pulse | 1Space | 0Pulse | 0Space |
|---|---|---|---|---|---|---|---|---|
| Canon | 32 | Space | 8800 | 4400 | 550 | 1650 | 550 | 550 |
| Denon | 15 | Space | 0 | 0 | 275 | 1900 | 275 | 775 |
| LG | 32 | Space | 8800 | 2200 | 550 | 1650 | 550 | 550 |
| Hitachi | 32 | Space | 8800 | 2200 | 550 | 1650 | 550 | 550 |
| JVC | 16 | Space | 2080 | 4160 | 520 | 1560 | 520 | 520 |
| Mitsubishi | 16 | Space | | | 300 | 1950 | 300 | 880 |
| NEC | 32 | Space | 8800 | 2200 | 550 | 1650 | 550 | 550 |
| Panasonic | 48 | Space | 4000 | 1600 | 400 | 1200 | 400 | 400 |
| Philips | 14 | Shift | | | 889 | 889 | 889 | 889 |
| Pioneer | 32 | Space | 8000 | 4000 | 500 | 1500 | 500 | 500 |
| Sanyo | 32 | Space | 7850 | 4200 | 525 | 1575 | 525 | 525 |
| Sharp | 17 | Space | | | 275 | 1900 | 275 | 775 |
| Sony | 15 | Pulse | 2200 | 550 | 1100 | 500 | 550 | 550 |
| Yamaha | 32 | Space | 8800 | 2200 | 550 | 1650 | 550 | 550 |

With reference to Table 1, units of all numerical values other than length values correspond to *µ*sec.

In this case, provided that a remote-controller of a first receiver to be operated may be out of order or may be lost, and a user employs a remote-controller of a second receiver manufactured by a manufacturing company different from that of the first receiver, a user-desired receiver (i.e., the first receiver) is disabled. The reason why the first receiver is disabled when the user employs the remote-controller of the second receiver is that remote-controllers of the first and second receivers must use different input pulses (See Table 1) pre-designed by individual manufacturing companies of the first and second receivers, and individual input pulses of the remote-controllers of the first and second receivers cannot be changed to other input pulses.

In this case, if a remote-controller of a specific receiver from among a plurality of receivers possessed by a user is out of order or is lost, the user must purchase an additional remote-controller for the specific receiver, or must directly operate the receiver using a key contained in a panel of the receiver.

### SUMMARY OF THE INVENTION

Accordingly, the present invention is directed to a remote-controller, a remote-controller receiver, a method for transmitting/receiving a remote-controller signal, and a remote-controller signal structure.

An object of the present invention is to provide a remote-controller, a remote-controller receiver, a method for transmitting/receiving a remote-controller signal, and a remote-controller signal structure, such that the remote-controller receiver can analyze a remote-controller transmission signal irrespective of different transmission schemes of individual manufacturing companies.

Another object of the present invention is to provide a method and apparatus for generating a signal in a physical layer of a remote-controller, such that a Home Audio/Video Interoperability (HAVi) support remote-controller protocol can be available for the remote-controller.

Still another object of the present invention is to provide a method for receiving a signal in a receiver's physical layer, such that a HAVi support remote-controller protocol can be available for the receiver.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a remote control signal for use in a system controlled by a remote controller includes a header portion and a code portion. The header portion indicates a key information transmission mode in which key information of the remote controller is transferred. The code portion contains at least a portion of main data representing the key information of the remote controller.

More specifically, the code portion includes a first custom code field indicating a data type of the main data portion and a total length of the main data, a second custom code field indicating a byte index of the main data portion, a first data code including the main data portion, and a second data code field including an error checking code associated with the data included in the first data code field.

In another aspect of the present invention, a remote includes a remote controller and a device controlled by the remote controller. The remote controller generates a first protocol message which includes at least a portion of main data representing key information of the remote controller and outputs a remote control signal including the first protocol message. On the other hand, the device receives the remote control signal from the remote controller and extracts the portion of the main data from the remote control signal. The device further stores the key information represented by the extracted main data portion.

The remote controller may further generate a second protocol message including identification information of the remote controller and may include the second protocol message in the remote control signal. The identification information of the remote controller includes at least one of a remote controller ID, a manufacturer ID, and a hardware version ID.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIGS. 1a~1c show different remote-controller signals of individual manufacturing companies;

FIG. 2 is a waveform diagram of a remote-controller signal divided into a header part and a code part;

FIG. 3 is a waveform diagram of a remote-controller signal format of a single pulse signal according to the present invention;

FIGS. 4a~4b are waveform diagrams of a remote-controller signal format configured in frame units according to the present invention;

FIGS. 5a~5c show exemplary information coding schemes for a remote-controller signal according to the present invention;

FIG. 6 is a block diagram illustrating a remote-controller and a receiver according to the present invention;

FIGS. 7a~7b show data allocation examples of a "Data Type" field and a "Data code1" field contained in a physical layer signal format according to the present invention;

FIGS. 8a~8b show examples for converting a HAVi-support Open Session Request message into a physical layer signal according to the present invention;

FIGS. 9a~9b show examples for converting a HAVi-support RC Key message into a physical layer signal according to the present invention;

FIGS. 10~11 are flow charts illustrating a method for converting remote-controller - associated information defined by a HAVi-support remote-controller common protocol into a physical layer signal, and a method for converting remote-controller key - associated information defined by the HAVi-support remote-controller common protocol into a physical layer signal according to the present invention; and

FIG. 12 is a flow chart illustrating a method for analyzing a physical layer signal using a receiver according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

Prior to describing the present invention, it should be noted that most terms disclosed in the present invention correspond to general terms well known in the art, but some terms have been selected by the applicant as necessary and will hereinafter be disclosed in the following description of the present invention. Therefore, it is preferable that the terms defined by the applicant be understood on the basis of their meanings in the present invention.

The present invention allows a specific receiver to use either a remote-controller of another receiver or a remote-controller manufactured by another manufacturing company different from that of the specific receiver. In this case, the receiver is indicative of a device operated by a remote-controller. For example, the device operated by the remote-controller may correspond to one of a TV, an audio-player, a video-player, an airconditioner, and a hand-held phone, etc.

For this purpose, if a remote-controller of another receiver instead of a remote-controller of a specific receiver is used, specifically, if a remote-controller manufactured by another manufacturing company different from that of the specific receiver is used, the remote-controller manufactured by another manufacturing company or the remote controller of another receiver must transmit its own information and other information associated with a remote-controller key to a corresponding receiver, and must register the aforementioned information in the corresponding receiver.

In this case, the remote-controller must generate first information associated with a remote-controller and second information associated with a remote-controller key, and must transmit the first and second information to a receiver, such that the receiver can recognize the first and second information. In addition, the receiver must determine whether a signal transmitted from the remote-controller is indicative of the information associated with the remote-controller or an operation command.

If the signal transmitted from the remote-controller is determined to be the information associated with the remote-controller, the receiver registers the aforementioned information in an internal storage unit, and performs an operation corresponding to an operation command received from the remote-controller. Otherwise, if the signal transmitted from the remote-controller is determined to be the operation command and the remote-controller is not registered in the receiver, the receiver is disabled.

Therefore, the present invention provides an inventive signal format, such that the receiver recognizes registration information of the remote-controller using the signal format, extracts only necessary information from among all received information using the signal format, and stores the extracted information.

If a specific remote-controller to which the aforementioned signal format is applied generates the remote-controller - associated information and the remote-controller key - associated information, and transmits the aforementioned information to a receiver, the receiver to which the signal format is applied extracts the remote-controller - associated information and the remote-controller key - associated information from the received information, and registers the extracted information in its internal storage unit.

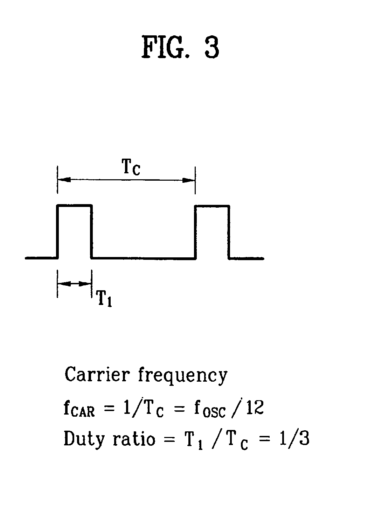

FIG. 3 shows an example of an inventive single pulse according to the present invention. In this case, the single pulse is modulated from 455 KHz to 37.91KHz by a remote-controller.

In this case, a carrier frequency f_{CAR} is 1/T_{c}=f_{OSC}/12, and a duty ratio is T₁/T_{c}=1/3, where T₁ is the length of a high pulse, and T_{c} is a period of a single pulse.

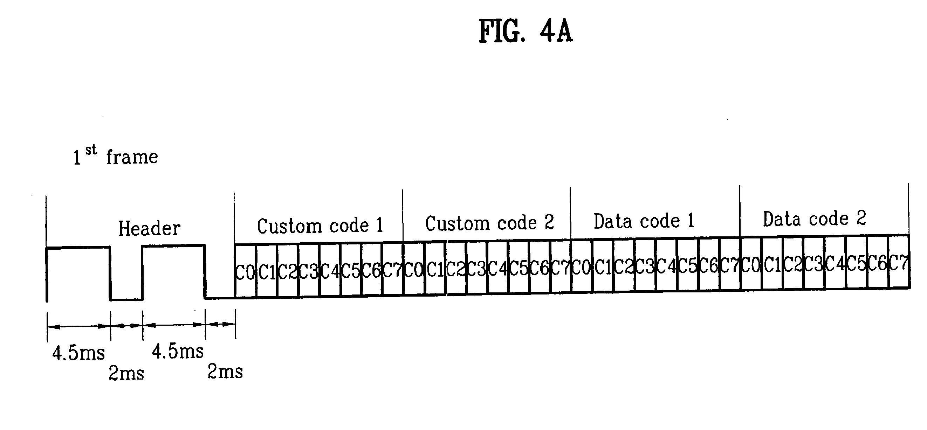

FIG. 4a is a 1-frame signal structure composed of a header part and a code part according to the present invention. The length of a high pulse of the header part is 4.5ms, and the length of a low pulse of the header part is 2ms, such that the header part includes a header signal composed of two periods. In other words, if the receiver receives the header signal having the aforementioned time lengths of 4.5ms and 2ms and the aforementioned signal structure from the remote-controller, it determines that the remote-controller is indicative of an inventive remote-controller of the present invention.

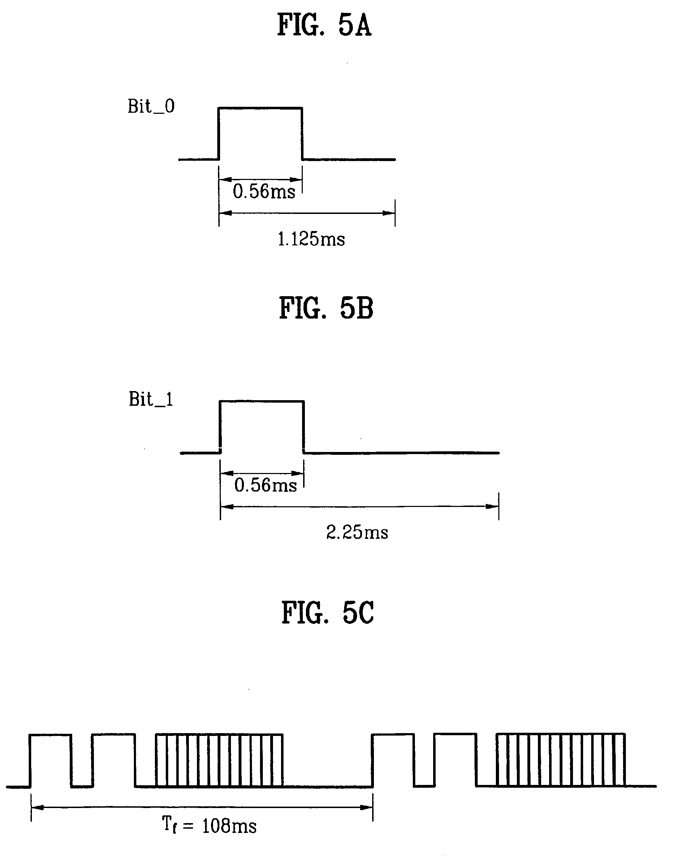

As shown in FIG. 5a, a high-pulse length of a bit "0" is set to 0.56 ms, and a low-pulse length of a bit "0" is set to 0.565 ms (1.125-0.56 ms) according to the present invention. As shown in FIG. 5b, a high-pulse length of a bit "1" is set to 0.56ms, and a low-pulse length of the bit "1" is set to 1.69 ms (2.25-0.56 ms) according to the present invention. In order to perform information coding, the length of a low-pulse (i.e., space) is changed. FIG. 5c shows an example in which the length T_{f} of a single frame is set to 108ms.

As shown in FIG. 4a, the code part is composed of 32 bits. In this case, the 32 bits are divided into a "Custom Code 1" field composed of 8 bits, a "Custom Code 2" field composed of 8 bits, a "Data Code 1" field composed of 8 bits, and a "Data Code 2" field composed of 8 bits.

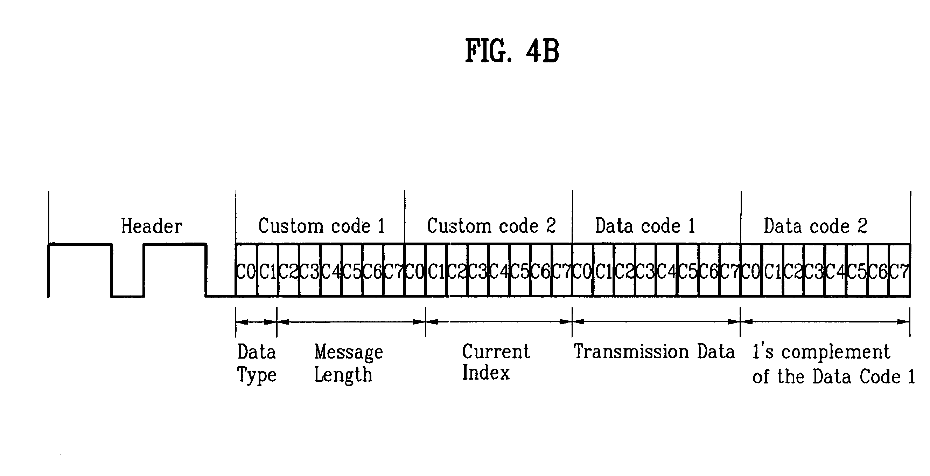

FIG. 4b is a detailed code part configured in frame units when a remote-controller based on the inventive signal format transmits its information.

As shown in FIG. 4b, the "Custom Code 1" field is divided into a data type part and a message length part. The "Custom Code 2" field is indicative of a current index, and the "Data Code 1" field is indicative of transmission data. The "Data Code 2" field is indicative of a 1's complement of the "Data Code 1" field, and is used to determine the presence or absence of an error of data transmitted to the "Data Code 1" field.

The data type field is assigned to two high-order bits of the "Custom Code 1" field, such that it is indicative of category information of transmission data. For example, the data type field can discriminate between data to be stored in a memory (i.e., information associated with a remote-controller and information associated with a remote-controller key) and data not to be stored in the memory (i.e., a message for requesting data transmission or a message for requesting a response, etc.).

The message length is assigned to 6 low-order bits of the "Custom Code 1" field and a 1 high-order bit of the "Custom Code 2" field, and such that it is indicative of the length of total bytes of messages (e.g., message-, request-, and response- syntax, etc.) for transmission of remote-controller information. In this case, provided that the message length is assigned to 7 bits, such that a maximum length of a transmittable message is equal to a length corresponding to 128 bytes.

The current index is assigned from a second high-order bit of the "Custom Code 2" field to a least significant bit (LSB), such that it is indicative of a currently-transmitted byte index from among a total message length prescribed in the "Custom Code 1" field.

The "Data Code 1" field is indicative of byte-unit data to be transmitted.

The "Data Code 2" field is indicative of a 1's complement of data of the "Data Code 1" field, such that it can determine the presence or absence of an error of the "Data Code 1" field.

A preferred embodiment of the present invention forms remote-controller - associated information and remote-controller key - associated information according to the aforementioned signal format, and transmits the aforementioned information, and receives/analyzes the transmission information. The aforementioned preferred embodiment of the present invention will hereinafter be described with reference to a HAVi-support receiver and a remote-controller of the HAVi receiver.

A Java-based receiver requires a Java API (Application Programming Interface) and a Java application connected to the Java API to execute a predetermined control operation, such that it can control signals received from a remote-controller of the Java-based receiver. In this case, the API and the application are constructed based on the Java.

If a standard Java API is prescribed, a Content Provider (CP) who manufactures a Java application provides the Java application according to the prescribed standard Java API, and a variety of manufacturing companies of individual receivers manufacture products capable of supporting the standard Java API.

Typically, the standard Java API associated with the remote-controller has been prescribed in the HAVi (Home Audio/Video Interoperability) Level 2 User Interface (UI) standard.

The HAVi Level 2 User Interface (UI) standard is indicative of a general-purpose interface associated with a remote-controller, such that it is currently adapted to United States data broadcast standards and European data broadcast standards, and is widely used in United States and Europe.

Referring to the aforementioned HAVi UI standard, content data associated with a remote-controller has been prescribed in "org.havi.ui.event.HRcCapabilities" and "org.havi.ui.event.HRcEvent".

In this case, the above-mentioned "org.havi.ui.event.HRcCapabilities" has a specific function by which an application can check a plurality of keys supportable by a remote-controller.

However, the HAVi Level 2 User Interface standard has not prescribed a method for supporting the aforementioned function for inspecting the keys supportable by the remote-controller.

In order to support the aforementioned function, a receiver must use a first method for pre-storing information associated with the keys supportable by the remote-controller, or must use a second method for retrieving information associated with the supportable keys from the remote-controller.

However, individual products of most manufacturing companies have generally been composed of a receiver and a remote-controller packaged in a single box, such that most users generally prefer to use the aforementioned first method rather than the aforementioned second method.

Therefore, the present invention is characterized in that the remote-controller converts the remote-controller common protocol into a physical layer signal having the aforementioned signal format, and transmits the physical layer signal, and the receiver analyzes the received physical layer signal.

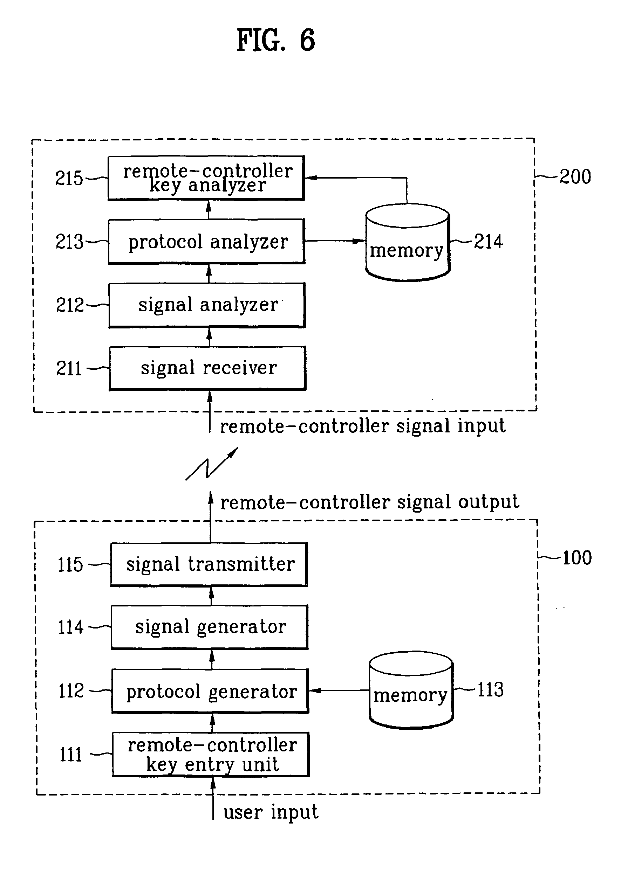

FIG. 6 is a block diagram illustrating an interfacing system between a remote-controller 100 and a receiver 200 according to the present invention.

Referring to FIG. 6, the remote-controller 100 may be a remote-controller of any one of manufacturing companies, and the receiver 200 may be a A/V device operated by a remote-controller, for example, a set-top box, a digital TV receiver, an audio-player, a video-player, and a DVD, etc.

The remote-controller 100 prescribes information associated with a remote-controller and other information associated with a remote-controller key according to a common protocol format, generates the prescribed remote-controller - associated information and the prescribed remote-controller key - associated information using the signal formats shown in FIGS. 3 to 5, and transmits the aforementioned information.

For this purpose, the remote-controller 100 includes a remote-controller key entry unit 111, a protocol generator 112, a memory 113, a signal generator 114, and a signal transmitter 115.

The remote-controller key entry unit 111 includes a plurality of keys via which a user enters desired key signals, and may include an additional information transmission key for transmitting the remote-controller - associated information and the remote-controller key - associated information. The information transmission key may be commonly used along with other keys if required.

For the convenience of description, if an information transmission key is pressed, an information transmission mode is activated, such that the information transmission mode converts the remote-controller - associated information and the remote-controller key - associated information, which are prescribed by the remote-controller common protocol, into physical layer signals.

The memory 113 is indicative of a storage unit for storing information associated with a corresponding remote-controller and information associated with a remote-controller key.

If a user pushes the information transmission key contained in the remote-controller key entry unit 111, the protocol generator 112 extracts the remote-controller - associated information and the remote-controller key - associated information from the memory 113, and prescribes the extracted remote-controller - associated information and the extracted remote-controller key - associated information according to a common protocol format. For example, if the aforementioned remote-controller serves as a one-way system, the protocol generator 112 sequentially generates a plurality of syntaxes, i.e., an "Open Session Request" syntax for requesting transmission of both remote-controller - associated information and remote-controller key - associated information, an "RC Info Message" syntax including the remote-controller - associated information, an "RC Key Message" syntax including the remote-controller key - associated information, and a "Close Session Request" syntax for requesting the termination of the aforementioned transmission of the remote-controller - associated information and the remote-controller key - associated information, and finally outputs the aforementioned syntaxes to the signal generator 114.

For the convenience of description, the term "Message" of the present invention includes the "Open Session Request" syntax, the "RC Info Message" syntax, the "RC Key Message" syntax, and the "Close Session Request" syntax.

The signal generator 114 configures the remote-controller - associated information and the remote-controller key - associated information, which have been prescribed in the form of the common protocol, in the form of a physical layer signal shown in FIGS. 3 to 5, and transmits the remote-controller - associated information and the remote-controller key - associated information via the signal transmitter 115.

The signal transmitter may be at least one of an IR transmitter, an RF transmitter, and a Bluetooth transmitter.

In the meantime, the receiver 200 extracts the remote-controller - associated information and the remote-controller key - associated information, which have been prescribed in the form of the common protocol, from the physical layer, and stores the extracted remote-controller - associated information and the extracted remote-controller key - associated information.

For this purpose, the receiver includes a signal receiver 211, a signal analyzer 212, a protocol analyzer 213, a memory 214, and a remote-controller key analyzer 215.

In more detail, the signal receiver 211 receives a physical layer signal including both the remote-controller - associated information and the remote-controller key - associated information from the remote-controller 100, and outputs the received physical layer signal to the signal analyzer 212. The signal receiver 211 may be at least one of an IR receiver, an RF receiver, and a Bluetooth receiver.

If the signal analyzer 212 receives a signal of the proposed signal format, it analyzes the received signal in a physical layer, and outputs the analyzed result to the protocol analyzer 213.

The protocol analyzer 213 determines whether the signal analyzed in the physical layer corresponds to either normal information not to be stored in the memory or signal information (e.g., the remote-controller - associated information and/or the remote-controller key - associated information) to be stored in the memory. The protocol analyzer 214 outputs the normal information to the remote-controller key analyzer 215, and stores the signal information to be stored in the memory 214. In this case, the memory 214 may store not only information associated with a single remote-controller, but also information associated with a plurality of remote-controllers. In other words, information associated with the actual remote-controller key is not converted into an upper message, and is used in only the physical layer.

The memory 214 stores a plurality of the remote-controller - associated information corresponding to storage spaces identified by individual remote-controller identifiers (IDs).

The remote-controller key analyzer 215 converts the received normal information into an upper message, and outputs the upper message. If a signal transmitted from the remote-controller 100 is an operation command of a remote-controller registered in the memory 214, the remote-controller key analyzer 215 reads a corresponding signal from the memory 214, analyzes the operation command, and controls necessary operations according to the analyzed operation command.

A method for constructing the remote-controller - associated information and the remote-controller key - associated information, which have been prescribed according to the common protocol format, in the form of physical layer signals will hereinafter be described.

In more detail, the remote-controller configures signal format headers shown in FIGS. 4a~4b, such that it indicates a physical layer signal capable of supporting the HAVi-support remote-controller common protocol.

And, the remote-controller indicates category information of a signal transmitted to the data type area assigned to two initial bits of the "Custom Code 1" field. For example, if the signal transmitted to the data type area is determined to be normal information, the value of "00" is displayed. If the signal transmitted the data type area is determined to be signal information, the value of "01" is displayed. The data type area may also be adapted to discriminate between data to be stored and data not to be stored.

According to a preferred embodiment of the present invention, a message associated with a remote-controller key varying with a manufacturing company and a receiver, i.e., a key code (keyCode) and a key signal (keySignal) of the "RC Key Message" syntax, may be denoted by a predetermined value of "01". Other messages other than the aforementioned message, e.g., message-, request-, and response- syntaxes prescribed in the HAVi-support remote-controller common protocol, may be denoted by a normal value of "00".

In this case, if a data type value contained in the "Custom Code 1" field indicates the value of "01" (i.e., a signal), the "Data Code 1" field serves as a signal type, such that it is not converted into an upper message, and is used only in a physical layer.

According to another preferred embodiment of the present invention, a remote-controller ID (resource_id) contained in the "Open Session Request" syntax, a manufacturing company ID (vendor_id) of a corresponding remote-controller in the "RC Info Message" syntax, remote-controller - associated information such as a remote-controller H/W version (hardware_version_id), each of the key code (keyCode) and the key signal (keySignal) of the "RC Key Message" syntax is denoted by signal information of "01", and other messages may be denoted by normal information of "00".

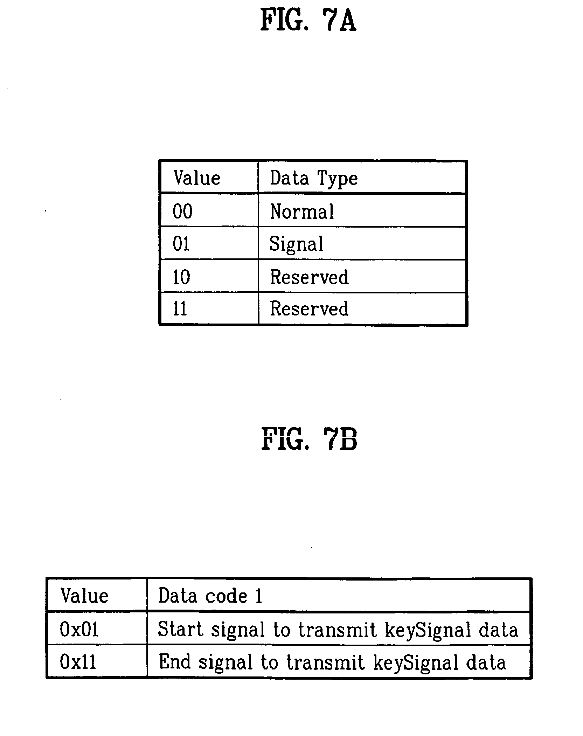

According to the present invention, prior to transmitting an actual signal associated with a remote-controller key as shown in FIG. 7b, the "Data Code 1" field of a frame is set to "0x01", such that it indicates a start signal for transmitting the key signal (keySignal). If all the actual keys associated with the remote-controller are transmitted, the "Data Code 1" field is set to "0x11", such that it indicates an end signal.

In other words, if the data type value is "01", and the "Data Code 1" field value is "0x01", the receiver determines that the next signal is indicative of key signal data of a corresponding remote-controller.

As shown in FIG. 4b, 6 low-order bits of the "Custom Code 1" field and the message length of 7 bits assigned to the most significant bit (MSB) of the "Custom Code 2" field indicate the length of total bytes of messages (i.e., message-, request-, and response- syntaxes, etc.) prescribed in the HAVi-support remote-controller common protocol. In this case, the aforementioned message length corresponds to 7 bits, such that a maximum length of a transmittable message corresponds to 128 bytes.

The "Custom Index" field assigned from a second high-order bit to the least significant bit (LSB) of the "Custom Code 2" field indicates a currently-transmitted byte index from among a total message length prescribed in the "Custom Code 1" field.

The "Data Code 1" field indicates byte-unit data to be transmitted.

The "Data Code 2" field indicates a 1's complement of the data of the "Data Code 1" field, such that it can determine the presence or absence of an error of the "Data code 1" field.

For example, if the data of the "Data code 1" field is "1101 0011", data of the "Data Code 2" field is "0010 1100".

A method for converting the normal information into a physical layer signal will hereinafter be described by referring to "Open Session Request" syntax from among the HAVi-support remote-controller common protocol.

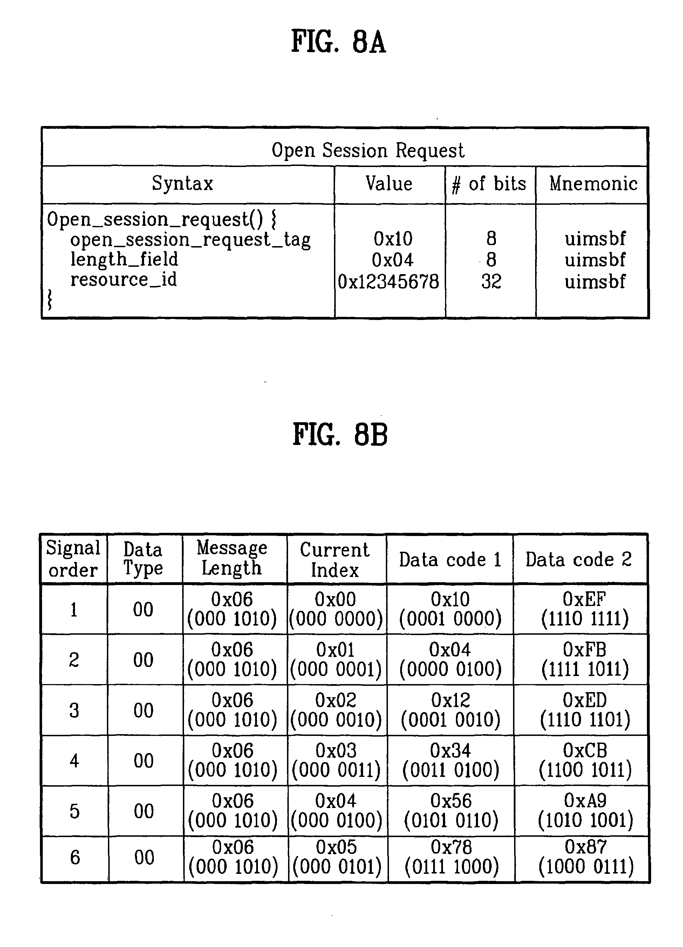

FIG. 8a shows the "Open Session Request" syntax according to the present invention.

The "Open Session Request" syntax is a message for requesting transmission of the remote-controller - associated information and the remote-controller key - associated information from the receiver. If the receiver receives the aforementioned "Open Session Request" syntax message, it is ready to receive the remote-controller - associated information and the remote-controller key - associated information via its remote-controller.

In other words, in order to command the remote-controller to transmit the remote-controller - associated information and the remote-controller key - associated information, the "Open Session Request" syntax shown in FIG. 8a is converted into a physical layer signal, and the physical layer signal is transmitted to the receiver.

In this case, the "Open Session Request" syntax may include a tag field (open_session_request_tag) indicative of the "Open Session Request" syntax, a length field (length_field), and an ID value (resource_id) of a remote-controller requesting the "Open Session Request ()" message.

FIG. 8b shows an example in which the "Open Session Request" syntax shown in FIG. 8a is converted into a physical layer signal. In other words, a transmission signal of an actual remote-controller is indicative of any code values shown in FIG. 8b instead of the syntax of FIG. 8a.

Referring to FIG. 8b, the "Data Type" value is denoted by normal information of "00", and a message length is 6. The "Current Index" value sequentially increases from 0 to 5.

For example, the "open_session_request_tag" field of the "Open Session Request" syntax includes a data type of "00", a message length of "0x06", a current index of "0x00", a "Data Code 1" field value of "0x10", and a "Data Code 2" field value of "0xEF".

Code allocation is executed to the remaining fields of the aforementioned "Open Session Request" syntax using the aforementioned method.

Individual code values contained in a frame are allocated to other messages from among the HAVi-support remote-controller common protocol using the aforementioned method.

A method for converting signal information into a physical layer signal will hereinafter be described by referring to the "RC Key Message" syntax contained in the HAVi-support remote-controller common protocol.

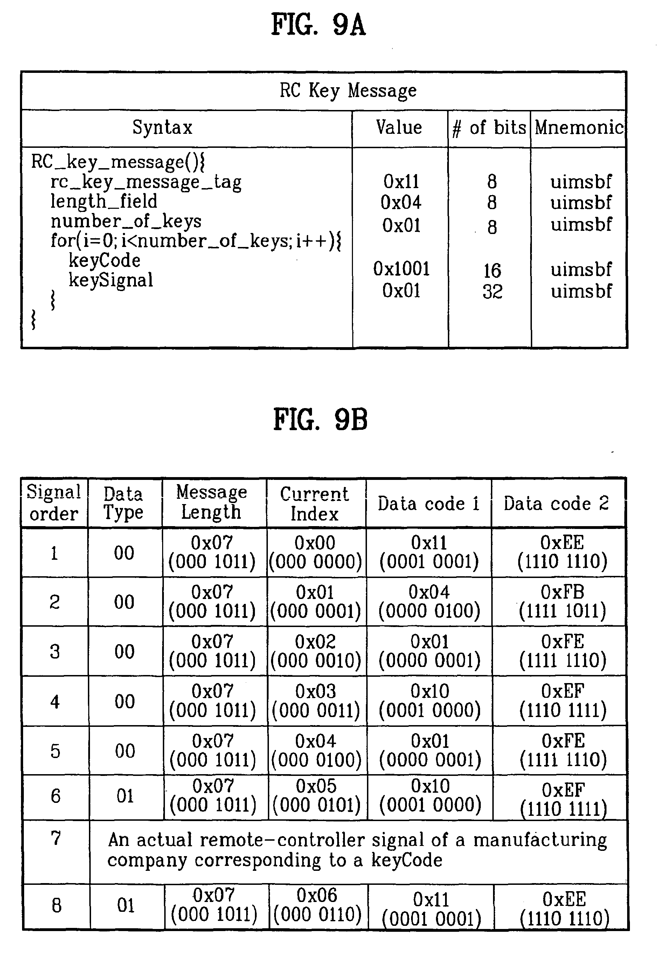

FIG. 9a shows the "RC Key Message" syntax according to the present invention. In this case, the "RC Key Message" syntax is a message including key signal data (i.e., keyCode, and keySignal) to be transmitted.

In this case, the "RC Key message" syntax may include a tag field (rc_key_mesage_tag) indicative of the "RC Key Mesage" syntax, a length field (length_field), a field (number_of_keys) indicative of the number of disclosed key values, a remote-controller's key value (keyCode), and physical signal information (keySignal) corresponding to the aforementioned key value (keyCode), etc.

FIG. 9b shows an example in which the "RC Key Message" syntax shown in FIG. 9a is converted into a physical layer signal. In other words, the value of physical signal information (keySignal) transmitted from actual transmission/reception ends is not equal to 32 bits of FIG. 9a, and is equal to content data shown in FIG. 9b.

Referring to FIG. 9b, the "Data Type" value is denoted by "00" in a normal area, and is denoted by "01" in a signal area. A message length is 6, and tThe "Current Index" value sequentially increases from 00 to 06.

For example, the "number_of_keys" field of the "RC Key Message" syntax includes a data type of "00", a message length of "0x06", a current index of "0x02", a "Data Code 1" field value of "0x01", and a "Data Code 2" field value of "0xFE". Code allocation is executed to the remaining fields of the aforementioned "RC Key Message" syntax using the aforementioned method.

However, the "RC Key Message" syntax includes a "keyCode" field and a "keySignal" Field. In other words, an actual remote-controller signal (keySignal)of a manufacturing company corresponding to the "keyCode" information is converted into a physical layer signal code, such that the physical layer signal code is transmitted.

Therefore, prior to transmitting an actual remote-controller signal of a manufacturing company corresponding to the "keyCode" information to a receiver, the remote-controller informs the receiver of the beginning of transmission of the actual remote-controller signal. If the transmission of the actual remote-controller signal is completed, the remote-controller must inform the receiver of the completion of the signal transmission.

For this purpose, a specific frame, which includes a data type of "01", a message length of "0x07", a current index of "0x05", a "Data Code 1" field value of "0x10", and a "Data Code 2" field value of "0xEF", is transmitted such that the frame informs the receiver of the beginning of signal transmission.

Thereafter, an actual remote-controller signal of a manufacturing company corresponding to the "keyCode" information is transmitted. For example, if a current remote-controller is manufactured by Sony Corporation, signals of individual keys contained in the remote-controller may be transmitted in the form of a signal shown in FIG. 1a. If a current remote-controller is manufactured by Panasonic Corporation, signals of individual keys contained in the remote-controller may be transmitted in the form of a signal shown in FIG. 1b.

If the aforementioned process is repeated a predetermined number of times corresponding to the value of "number_of_keys" field, a specific frame, which includes a data type of "01", a message length of "0x07", a current index of "0x06", a "Data Code 1" field value of "0x11", and a "Data Code 2" field value of "0xEE", is transmitted such that the frame informs the receiver of the termination of signal transmission.

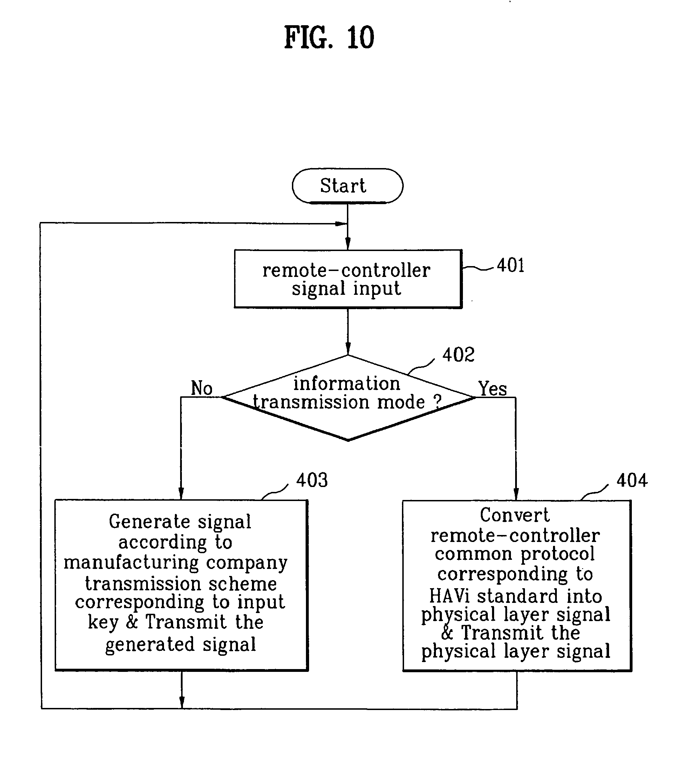

FIGS. 10~11 are flow charts illustrating a method for converting remote-controller - associated information defined by a HAVi-support remote-controller common protocol into a physical layer signal, and a method for converting remote-controller key - associated information defined by the HAVi-support remote-controller common protocol into a physical layer signal according to the present invention.

Referring to FIG. 10, if a user pushes a specific key of a remote-controller at step S401, it is determined whether the specific key is indicative of an information transmission key capable of transmitting the remote-controller - associated information and the remote-controller key - associated information at step 402.

If the specific key is not equal to the aforementioned information transmission key at step 402, a signal corresponding to the input key is formed by a unique signal transmission scheme of a manufacturing company of the remote-controller, and is then transmitted at step S403. Otherwise, if the specific key is determined to be the aforementioned information transmission key at step 402, the HAVi-support remote-controller common protocol is converted into a physical layer signal according to the aforementioned signal transmission scheme, and is then transmitted at step S404.

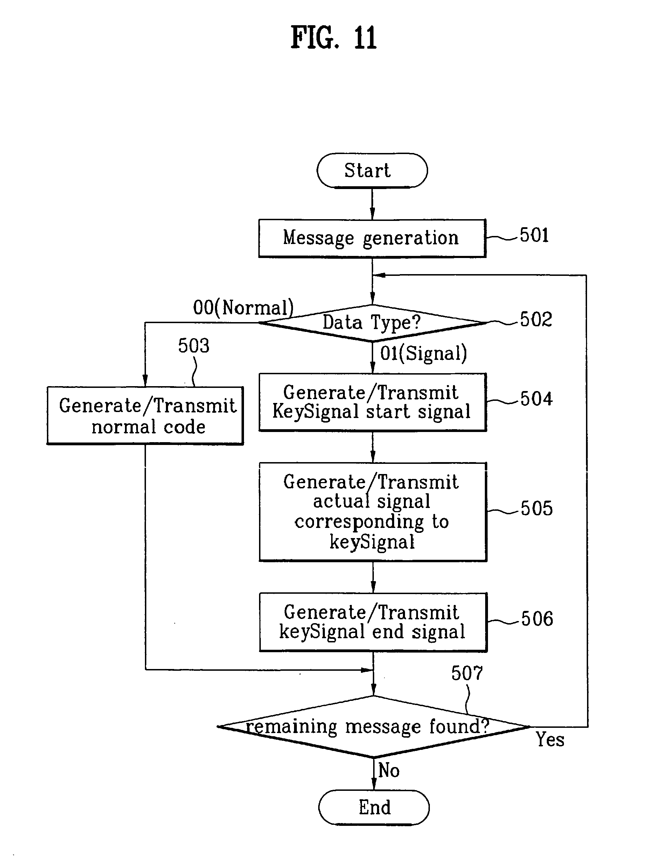

FIG. 11 is a detailed flow chart illustrating the above step 404 shown in FIG. 10.

Referring to FIG. 11, when a message is converted into a physical layer signal at step S501, it is determined whether a data type of the message is indicative of normal information or signal information at step S502. If it is determined that the data type of the message is indicative of the normal information, the value of "00" is assigned to the data type value, a normal code of the physical layer is formed by the aforementioned process shown in FIG. 8, and is then transmitted at step 503.

If it is determined that data type of the message is indicative of the signal information, the value of "01" is assigned to the data type value, a start signal of the "keySignal" information is formed as shown in FIG. 9, and is transmitted at step 504. In other words, the frame indicating the beginning of the "keySignal" information includes a data type of "01", a message length of "0x07", a current index of "0x05", a "Data Code 1" field value of 0x10, and a "Data Code 2" field value of 0xEF.

After the start signal of the aforementioned "keySignal" information is transmitted, actual key signals (keySignal) of a manufacturing company corresponding to each key of the remote-controller is formed and transmitted at step S505. After all actual key signals of the manufacturing company are transmitted, an end signal of the "keySignal" information is formed and transmitted at step 506. In this case, a frame indicating the end of the "keySignal" information includes a data type of "01", a message length of "0x07", a current index of "0x06", a "Data Code 1" field value of "0x11", and a "Data Code 2" field value of "0xEE".

Thereafter, it is determined whether more messages to be formed as physical layer signals remain in the HAVi-support remote-controller common protocol. If there is no message to be formed as the physical layer signal, overall operations are terminated. If the presence of the aforementioned message is determined, an operation process returns to the above step 502, such that the aforementioned steps are repeated.

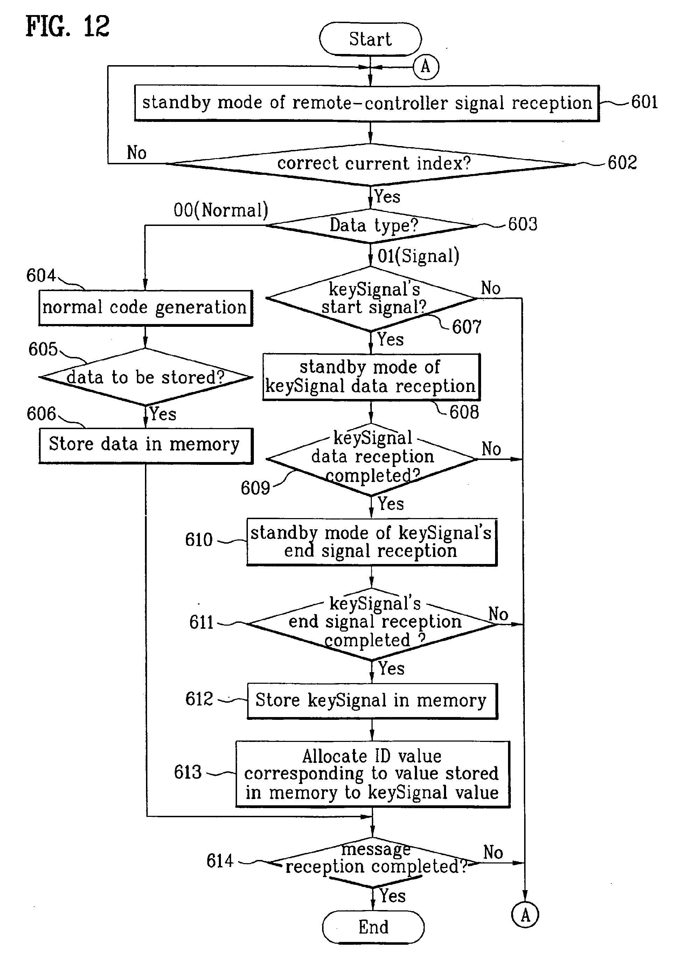

FIG. 12 is a flow chart illustrating a method for receiving a remote-controller signal in a receiver to which the HAVi-support remote-controller common protocol is supported, and analyzing the received remote-controller signal in a physical layer according to the present invention.

The receiver waits for the remote-controller. If the remote-controller signal is received in the receiver at step 601, it is determined whether the current index is correct or not at step 602. In other words, it is determined whether the value of the current index sequentially increases at step 602. Since the remote-controller wirelessly transmits a signal, the signal may be erroneously transmitted to a desired destination due to the occurrence of an unexpected obstacle (e.g., a human being) when the remote-controller transmits the signal to the destination.

Therefore, if the current index is incorrect at step 602, a corresponding frame is disregarded, and an operation process returns to the above step 601. Otherwise, if the current index is correct at step 602, it is determined whether a data type of a corresponding frame is indicative of normal information of "00" or signal information of "01" at step 603.

If it is determined that the data type of the frame is determined to be the normal information of "00", normal codes are formed at step 604. In this case, it is determined whether a code to be stored is contained in the formed normal codes at step 605. In this case, the code to be stored is indicative of a code value corresponding to unique information of a remote-controller from among the remaining signals other than key signals of individual manufacturing companies. For example, the aforementioned code may correspond to an ID value (resource_id) of a corresponding remote-controller, an ID value (vendor_id) of a manufacturing company of a corresponding remote-controller, and a remote-controller H/W version value (hardware_version_id), etc. In this case, the ID value (resource_id) of the remote-controller is contained in the "Open Session Request" syntax, and the ID value (vendor_id) of the remote-controller is contained in the "RC Info Message" syntax. The data type may be adapted to discriminate among the aforementioned information. For example, when a remote-controller forms a physical layer signal, the data type of a field including the remote-controller - associated information is assigned to the value of "01". In this case, data to be transmitted is small-sized, so that a start signal and an end signal may be established or may not be established.

If information to be stored is determined at step 605, the information is stored in the memory 214 at step 606, and it is determined whether message reception is completed at step 614.

In the meantime, if the data type is determined to be signal information of "01" at step 603, it is determined whether the start signal of the key signal (keySignal) is provided by referring to the value of the "Data code 1" field at step 607.

If the "Data Code 1" field value is "0x10" at step 607, the start signal is determined, and a standby mode for a predetermined period of time is established until an actual remote-controller signal (keySignal) of a manufacturing company corresponding to the "keyCode" information is received at step 608.

Thereafter, it is determined whether reception of the "keySignal" data is completed at step 609. If the reception of the "keySignal" data is completed at step 609, the receiver waits for a predetermined period of time until receiving the end signal of the "keySignal" data at step 610. If a predetermined period of time elapses, the receiver determines whether the end signal of the "keySignal" data is completely received by referring to the "Data Code 1" field value at step 611.

If the "Data Code 1" field value is "0x11", the end signal is determined, and the received "keySignal" data is stored in the memory 214 at step 612.

In this case, the "keySignal" data stored in the memory 214 is stored at step 613 while being classified according to remote-controller IDs (resource_id) having been stored at the above step 606. If necessary, the aforementioned "keySignal" data may be classified according to a manufacturing company ID value (vendor_id) of a corresponding remote-controller and a remote-controller H/W version value (hardware_version_id).

It is determined whether message reception is completed. If the message reception is not completed, an operation process returns to step 601, such that the aforementioned steps are repeated.

If the receiver receives an operation command from the remote-controller after the aforementioned registration steps are performed, the receiver determines whether the remote-controller ID value is registered in the memory 214. If the remote-controller ID value is registered in the memory 214, this means that the remote-controller is registered in a receiver, such that a signal corresponding to the operation command is retrieved from the memory 214, and an operation corresponding to the operation command is controlled. In this case, if a plurality of the same remote-controller ID values are contained in the memory 214, the receiver determines whether a corresponding remote-controller is registered using either the manufacturing company ID or the remote-controller H/W version value, and controls necessary operations.

As described above, when the HAVi-support remote-controller common protocol message is converted into a physical layer signal, the present invention indicates a data type of the remote-controller key - associated information and/or a data type of the remote-controller - associated information as signal information using the aforementioned signal format, and indicates the remaining messages other than the aforementioned message as normal information. The receiver stores data whose data type is denoted by a signal, i.e., the remote-controller - associated information and the remote-controller key - associated information for each remote-controller, in a memory as a database. In this case, the aforementioned signal for classifying the remote-controller may use at least one of the remote-controller ID, the manufacturing company ID of the remote-controller, and the remote-controller H/W version value.

In other words, a remote-controller who desires to support a protocol definition for an active remote-controller system for coping with the HAVi-standard uses a physical layer signal generation scheme of the present invention, such that the receiver can analyze a desired signal irrespective of individual transmission schemes of different manufacturing companies.

If the remote-controller is registered in the receiver, and an operation command (e.g., a volume-up key) is entered by the remote-controller, the signal is transmitted according to individual transmission schemes of the manufacturing companies. For example, if the manufacturing company of the remote-controller is Sony Corporation, the above-mentioned operation command signal is transmitted in the form of the signal format shown in FIG. 1a. In this case, the actual remote-controller key signal is transmitted according to unique transmission schemes of individual manufacturing companies during an information transmission mode, and is then registered in the receiver. Therefore, although the operation command is transmitted according to individual transmission schemes of the manufacturing companies, the receiver can analyze the operation command, and can control operations associated with the operation command.

It should be noted that most terminology disclosed in the present invention is defined in consideration of functions of the present invention, and can be differently determined according to intention of those skilled in the art or usual practices. Therefore, it is preferable that the above-mentioned terminology be understood on the basis of all contents disclosed in the present invention.

As apparent from the above description, a remote-controller, a remote-controller receiver, a method for transmitting/receiving a remote-controller signal, and a remote-controller data structure according to the present invention have the following effects.

Firstly, the present invention proposes a remote-controller signal format, such that a remote-controller of another manufacturing company or a remote-controller of another receiver can transmit the remote-controller - associated information and the remote-controller key - associated information. Also, the receiver proposes a remote-controller signal format, such that the receiver can analyze the remote-controller signal, remote-controllers of all the manufacturing companies can be commonly used. Particularly, the present invention may also be applicable to a system which uses a plurality of remote-controllers.

Secondly, the present invention uses a physical layer scheme to support the HAVi-support remote-controller common protocol, such that a receiver can use all the remote-controllers irrespective of different technical schemes of individual manufacturing companies of remote-controllers.

Thirdly, if a remote-controller of another manufacturing company or a remote-controller of another receiver transmits the remote-controller - associated information and the remote-controller key - associated information, and registers the aforementioned information in the receiver, the present invention allows a corresponding remote-controller to transmit a signal according to a unique transmission scheme of a corresponding manufacturing company, such that it can support the HAVi-support remote-controller common protocol, and at the same time can maintain individual remote-controller transmission technique schemes of physical layer for each manufacturing company.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A remote control signal for use in a system controlled by a remote controller, the remote control signal comprising:
a header portion indicating an information transmission mode in which at least one of an information of the remote controller and a key information of the remote controller is transmitted; and
a code portion containing at least a portion of main data representing at least one of the information of the remote controller and the key information of the remote controller.

2. The remote control signal of claim 1, wherein the code portion comprises:
a first custom code field indicating a data type of the portion of the main data and a total length of the main data;
a second custom code field indicating a byte index of the portion of the main data;
a first data code field including the portion of the main data; and
a second data code field including an error checking code associated with the first data code field.

3. The remote control signal of claim 2, wherein the total length of the main data is defined by a portion of the first custom code field and a portion of the second custom code field.

4. The remote control signal of claim 1, wherein the header portion includes two pairs of a high-pulse and a low-pulse, and wherein a width of the high-pulse is at least two times greater than a width of the low-pulse.

5. The remote control signal of claim 4, wherein the width of the high-pulse is 4.5 ms and the width of the low-pulse is 2 ms.

6. The remote control signal of claim 1, wherein a low-pulse width of a data bit included in the code portion determines whether the data bit is a "0" or "1" bit.

7. The remote control signal of claim 1, wherein the low-pulse width of the data bit is 0.565 ms when the data bit is a "0" bit, and the low-pulse width of the data bit is 1.69 ms when the data bit is a "1" bit.

8. The remote control signal of claim 2, wherein the data type of the portion of the main data indicates whether the portion of the main data needs to be stored in the system.

9. The remote control signal of claim 2, wherein the data type is defined by two upper bits of the first custom code field, the total length of the main data is defined by six lower bits of the first custom code field and one upper bit of the second custom code field, the byte index is defined by seven lower bits of the second custom code field, and eight bits of the second data code field are used to carry the error checking code.

10. A remote control signal for use in a system controlled by a remote controller, the remote control signal comprising:
a first data code field including at least a portion of main data representing at least one of an information of the remote controller and a key information of the remote controller.
a first custom field indicating a data type of the portion of the main data included in the first data code field and a total length of the main data;
a second custom code field indicating a byte index of the portion of the main data; and
a second data code field including a code for checking an error of the portion of the main data.

11. The remote control signal of claim 10, wherein the total length of the main data is defined by a portion of the first custom code field and a portion of the second custom code field.

12. The remote control signal of claim 10, further comprising a header which includes two pairs of a high-pulse and a low-pulse, wherein a width of the high-pulse is at least two times greater than a width of the low-pulse.

13. The remote control signal of claim 10, wherein a lower-pulse width of a data bit included in any one of the first and second data code fields and the first and second custom code fields determines whether the data bit is a "0" or "1" bit.

14. The remote control signal of claim 10, wherein the data type of the portion of the main data indicates whether the portion of the main data needs to be stored in the system.

15. The remote control signal of claim 10, wherein the data type is defined by two upper bits of the first custom code field, the total length of the main data is defined by six lower bits of the first custom code field and one upper bit of the second custom code field, the bit index is defined by seven lower bits of the second custom code field, and eight bits of the second data code field are used to carry the error checking code.

16. The remote control signal of claim 10, wherein the error checking code comprises a ones complement of the portion of the main data included in the first data code field.

17. A remote control system comprising:
a remote controller for generating a first protocol message including at least a portion of main data representing at least one of an information of the remote controller and a key information of the remote controller and for outputting a remote control signal including the first protocol message; and
a device for receiving the remote control signal including the protocol message from the remote controller, extracting the portion of the main data from the control signal, and storing the key information represented by the extracted portion of the main data.

18. The remote control system of claim 17, wherein the remote control signal comprises:
a header portion indicating a key information transmission mode in which the key information of the remote controller is outputted from the remote controller; and
a code portion including the portion of the main data.

19. The remote control system of claim 18, wherein the code portion comprises:
a first custom code field indicating a data type of the portion of the main data and a total length of the main data;
a second custom code field indicating a byte index of the portion of the main data;
a first data code field including the portion of the main data; and
a second data code field including an error checking code associated with the first data code field.

20. The remote control system of claim 19, wherein the data type of the portion of the main data indicates whether the portion of the main data needs to be stored in the device.

21. The remote control system of claim 17, wherein the remote controller further generates a second protocol message including identification information of the remote controller, and includes the second protocol message in the remote control signal.

22. The remote control system of claim 21, wherein the identification information of the remote controller includes at least one of a remote controller ID, a manufacturer ID, and a hardware version ID.

23. A method of controlling a device with a remote controller, the method comprising:
generating a first protocol message including at least a portion of main data representing at least one of an information of the remote controller and a key information of the remote controller;
transmitting a remote control signal from the remote controller to the device, the remote control signal including the first protocol message; and
extracting the portion of the main data from the control signal at the device, and storing the key information represented by the extracted portion of the main data in a memory included in the device.

24. The method of claim 23, wherein the remote control signal comprises:
a header portion indicating a key information transmission mode in which the key information of the remote controller is outputted from the remote controller; and
a code portion including the portion of the main data.

25. The method of claim 24, wherein the code portion comprises:
a first custom code field indicating a data type of the portion of the main data and a total length of the main data;
a second custom code field indicating a byte index of the portion of the main data;
a first data code field including the portion of the main data; and
a second data code field including an error checking code associated with the first data code field.

26. The method of claim 25, wherein the data type of the portion of the main data indicates whether the portion of the main data needs to be stored in the memory.

27. The method of claim 23, further comprising generating a second protocol message including identification information of the remote controller, wherein the second protocol message is included in the remote control signal.

28. The method of claim 27, wherein the identification information of the remote controller includes at least one of a remote controller ID, a manufacturer ID, and a hardware version ID.
